# FASCICULE DE BREVET EUROPEEN

(11) **EP 2 674 654 B1**
(45) Date de publication et mention de la délivrance du brevet: **24.02.2016**
(21) Numéro de dépôt: 13171343.0
(22) Date de dépôt: 11.06.2013
(51) Int. Cl.: F16L 3/04, F24D 3/14

(54) **Agrafe de fixation de tube ou de câble sur une structure porteuse et utilisation d'une telle agrafe**
Befestigungsklammer für Rohr oder Kabel auf einer Tragestruktur, und Verwendung einer solchen Klammer
Clip for fixing a tube or cable on a support structure and use of such a clip

(30) Priorité: 11.06.2012 FR 1255443
(43) Date de publication de la demande: 18.12.2013
(73) Titulaire: Chappuis, Fabrice Philippe Thierry, 73310 Chanaz (FR)
(72) Inventeur: Chappuis, Fabrice Philippe Thierry, 73310 Chanaz (FR)
(74) Mandataire: Myon, Gérard Jean-Pierre

(56) Documents cités:
- DE-C1- 19 809 587
- DE-U1- 20 105 940
- FR-A1- 2 960 936

## Description

La présente invention concerne une agrafe de fixation de tube ou de câble sur une structure porteuse, notamment de tube de circulation de fluide caloporteur ou de câble chauffant sur des dalles isolantes, ainsi que l'utilisation d'une telle agrafe.

Dans le domaine de l'installation de système de chauffage par le sol, il est connu d'installer des tubes de circulation de fluide caloporteur sur des dalles isolantes réalisées en polyuréthane ou polystyrène. Pour cela, il est connu d'utiliser des agrafes réalisées en matériau synthétique, globalement en forme de U et dont les branches sont pourvues de pointes en harpon permettant leur accrochage dans les dalles. Ces pointes en harpon sont généralement équipées d'ailettes obliques permettant d'améliorer l'ancrage de l'agrafe dans la dalle et d'empêcher que l'agrafe ne sorte accidentellement de la dalle avant qu'une chape recouvrant les tubes ne soit coulée.

Le matériau qui compose les dalles isolantes est généralement poreux et friable, ce qui empêche les pointes en harpon des agrafes de retenir les tubes de manière satisfaisante. Ces agrafes ont donc une résistance à l'arrachage faible.

Certaines dalles isolantes comportent une feuille métallique, par exemple en aluminium, rapportée sur la surface supérieure de la dalle, qui améliore l'isolation thermique de la dalle. Lorsqu'une agrafe est implantée dans une telle dalle, les pointes en harpon perforent et déchirent la feuille d'aluminium. Lorsque l'agrafe est soumise à un effort d'arrachement, le matériau friable composant la dalle se désagrège et les pointes en harpon sortent de la dalle par les orifices préalablement formés dans la feuille d'aluminium. Ainsi, les agrafes connues ne permettent pas de fixer de manière satisfaisante les tubes sur des dalles recouvertes par une feuille métallique.

DE-U-201 05940 divulgue une agrafe comprenant des griffes d'accrochage dans la feuille d'aluminium située au-dessus des pointes en harpon. Les griffes sont plus fines que les ailettes des pointes en harpon, de sorte qu'en cas d'arrachement de l'agrafe, la griffe ne peut pas s'accrocher dans la feuille d'aluminium car elle se situe dans le trou réalisé par les pointes en harpon lors de la pose de l'agrafe.

C'est à ces inconvénients qu'entend plus particulièrement remédier l'invention en proposant une nouvelle agrafe de fixation de tube ou de câble sur une structure porteuse, dont la structure lui permet d'améliorer sa résistance à l'arrachage, en particulier lorsqu'elle est utilisée pour des dalles isolantes comprenant une plaque en polyuréthane ou polystyrène sur laquelle est rapportée une feuille en aluminium.

A cet effet, l'invention concerne une agrafe de fixation de tubes ou de câbles sur une structure porteuse comprenant une plaque recouverte d'une feuille de finition, l'agrafe présentant, dans un plan, une forme en « U » et comportant deux branches sensiblement parallèles reliées par une partie médiane courbe, chaque branche étant délimitée par au moins une face avant et une face arrière opposées, globalement parallèles au plan, chaque branche étant terminée par une pointe en harpon comprenant au moins une ailette rattachée à cette branche. Conformément à l'invention, au moins une branche comporte une griffe d'accrochage dans la feuille de finition, qui est située entre la partie médiane courbe et la pointe en harpon, caractérisée en ce que la griffe d'accrochage dépasse, selon une direction perpendiculaire au plan, d'une première zone de la face avant et/ou d'une première zone de la face arrière de la branche, situées dans une deuxième zone s'étendant, le long de la branche, jusqu'à 5 mm de part et d'autre de la partie de la griffe d'accrochage la plus éloignée de la première zone de la face avant et/ou de la première zone de la face arrière. Aucune partie de l'agrafe ne se trouve dans le prolongement de la griffe d'accrochage, selon une direction perpendiculaire aux deux branches, dans un premier sens allant de l'espace libre situé entre les branches et vers l'espace situé à l'extérieur des branches et/ou dans un deuxième sens opposé au premier sens.

Lorsque l'agrafe est implantée dans la dalle, les pointes en harpon forment des orifices dans la feuille d'aluminium. Grâce à l'invention, les griffes sont bloquées en-dessous de la feuille d'aluminium et, en cas d'arrachement accidentel de l'agrafe, les griffes empêchent l'agrafe de sortir de la dalle. En particulier, la partie des griffes qui dépasse de part et d'autre des branches se prend dans la feuille d'aluminium, sur le pourtour des orifices, ce qui retient les pointes en harpon dans la dalle. Ainsi, l'agrafe conforme à l'invention présente une résistance à l'arrachage améliorée.

Selon des aspects avantageux mais non obligatoire de l'invention, une telle agrafe peut incorporer une ou plusieurs des caractéristiques suivantes, prises dans toute combinaison techniquement admissible :
- Le dépassement minimum de la griffe d'accrochage par rapport à la première zone de la face avant et/ou la première zone de la face arrière de la branche, mesuré selon la direction perpendiculaire au plan et dans la deuxième zone, est compris entre 0,5 mm et 3 mm.
- La largeur maximale de la griffe, mesurée selon la direction perpendiculaire au plan, est strictement supérieure à la largeur minimale débouchante de la branche, mesurée dans la deuxième zone.
- La griffe s'étend au moins en partie sur au moins la face avant et/ou la face arrière de la branche et/ou au moins une face latérale externe de la branche, tournée à l'opposé de l'autre branche et/ou une face latérale interne de la branche, tournée en vis-à-vis de l'autre branche.
- La griffe est étagée et comprend :
   - une première partie délimitée, du côté de la partie médiane courbe et à l'opposé des pointes en harpon, par une face supérieure,
   - une deuxième partie qui est raccordée à la face supérieure de la première partie.
- La griffe s'étend au moins en partie entre les deux branches de l'agrafe.
- La griffe comporte au moins une face d'appui contre la feuille de finition.
- La largeur maximale de la griffe d'accrochage est strictement supérieure à la largeur maximale d'une ailette s'étendant à l'aplomb de la griffe d'accrochage.
- La griffe comprend au moins une partie qui dépasse du contour formé par la projection de la branche et de chaque ailette correspondantes, dans un plan perpendiculaire à la direction de la branche.

L'invention concerne également l'utilisation d'une agrafe de fixation de tubes ou de câbles sur une structure porteuse comprenant une plaque recouverte d'une feuille de finition, l'agrafe présentant, dans un plan, une forme en « U » et comportant deux branches sensiblement parallèles reliées par une partie médiane courbe, chaque branche étant terminée par une pointe en harpon comprenant au moins une ailette rattachée à cette branche. Conformément à l'invention, après la formation d'un orifice par perforation de la feuille de finition par une partie de l'agrafe située entre une griffe d'accrochage dans la feuille de finition et l'extrémité inférieure de la pointe en harpon, une partie de la griffe d'accrochage dépasse du contour de l'orifice.

L'invention sera mieux comprise et d'autres avantages de celle-ci apparaîtront plus clairement à la lumière de la description qui va suivre de quatre modes de réalisation d'une agrafe conforme à son principe, donnée uniquement à titre d'exemple et faite en référence aux dessins annexés dans lesquels :
- La figure 1 est une vue en perspective d'une agrafe conforme à l'invention ;
- La figure 2 est une vue, à plus grande échelle, du détail Il à la figure 1 ;
- Les vues 3 et 4 sont des vues respectivement de face et de côté de l'agrafe de la figure 1 ;
- La figure 5 est une vue, à plus grande échelle, du détail V à la figure 4 ;
- La figure 6 est une coupe selon la ligne VI-VI à la figure 3 ;
- Les figures 7 à 10 sont des vues analogues aux figures 1 à 3 d'une agrafe conforme à un deuxième mode de réalisation de l'invention ;
- Les figures 11 à 14 sont des vues analogues aux figures 1 à 3 d'une agrafe conforme à un troisième mode de réalisation de l'invention ;
- Les figures 15 à 18 sont des vues analogues aux figures 1 à 3 d'une agrafe conforme à un quatrième mode de réalisation de l'invention ; et
- La figure 19 est une vue analogue à la figure 2 d'une agrafe conforme à un cinquième mode de réalisation de l'invention.

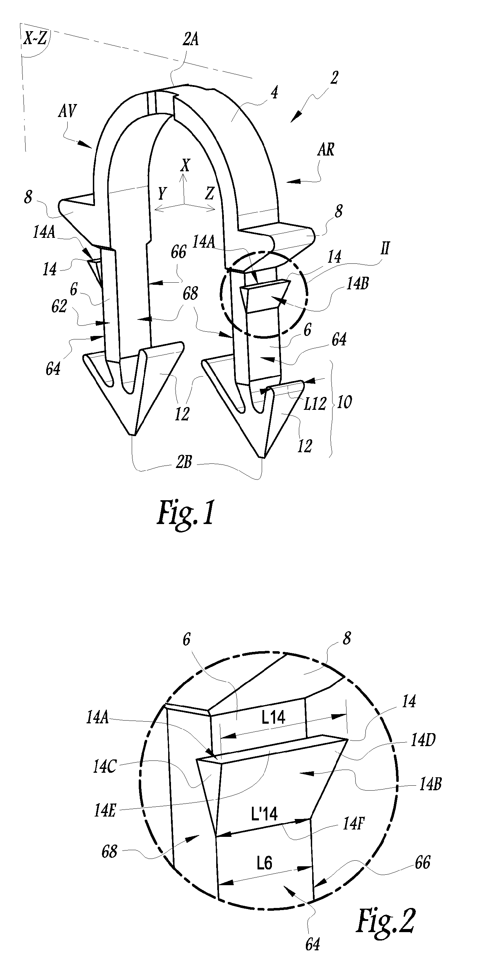

L'agrafe 2 représentée aux figures 1 à 6 présente, dans un plan X-Z, une forme en U comportant une partie médiane courbe 4 et deux branches 6 sensiblement rectilignes et parallèles. Aux jonctions entre chaque branche 6 et la partie médiane 4, l'agrafe 2 présente un appendice latéral et externe 8 destiné à coopérer avec un dispositif de pose d'agrafe connu par exemple de EP-A-2 361 730. A l'opposé des appendices 8, chacune des branches 6 est terminée par une pointe en harpon 10 comportant deux ailettes 12 obliques. Les ailettes 12 de chaque branche 6 forment un « V » dont la pointe est tournée à l'opposé de la partie médiane 4.

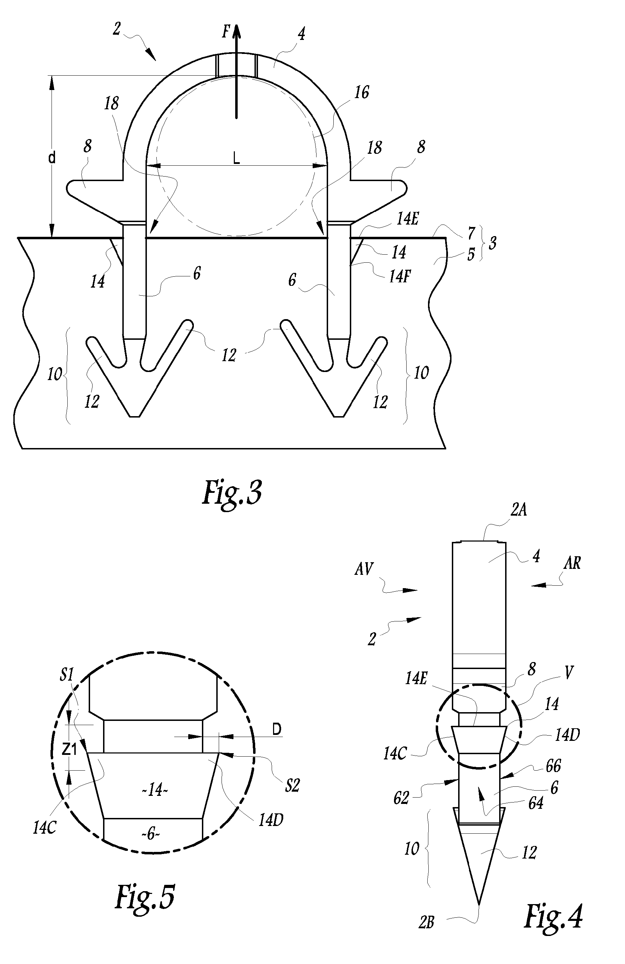

L'agrafe 2 est symétrique par rapport au plan X-Z et présente une face avant AV et une face arrière AR opposée à la face avant AV. La face avant AV est tournée vers l'avant aux figures 1 à 3 et vers la gauche aux figures 4 et 5.

On note X un axe longitudinal médian de l'agrafe 2 passant entre les branches 6, contenu dans le plan X-Z et globalement parallèle aux branches 6.

Chaque branche 6 est à section rectangulaire et est délimitée par quatre faces : une face avant 62, tournée vers la face avant AV, une face arrière 66 parallèle à la face avant 62 et tournée vers la face arrière AR, une face latérale externe 64 perpendiculaire aux faces 62 et 66 et tournée à l'opposé de l'autre branche 6, ainsi qu'une face latérale interne 68 parallèle à la face latérale 64 et tournée en vis-à-vis de la face interne 68 de l'autre branche 6.

On note 2A l'extrémité supérieure de l'agrafe 2, située au centre de la partie courbe 4 et à l'opposé de l'espace libre de réception d'un tube ou d'un câble 16 entre les branches 6. L'extrémité des pointes en harpon 10 formant la pointe du « V » constitue l'extrémité inférieure 2B de l'agrafe 2.

La description est orientée en considérant que les termes « supérieur » et « haut » correspondent à une direction globalement parallèle à l'axe X et allant de l'extrémité inférieure 2B de l'agrafe 2 vers l'extrémité supérieure 2A, c'est-à-dire une direction dirigée vers le haut des figures 1 à 5, tandis que les termes « inférieur » et « bas » correspondent à une direction opposée.

Chaque branche 6 comporte une griffe 14 située, le long de la branche 6, entre la pointe en harpon 10 et l'appendice latéral 8 de cette branche et donc entre la partie centrale courbe 4 et la pointe en harpon 10 de cette branche. Les griffes 14 sont similaires et symétriques l'une par rapport à l'autre, par rapport à un plan médian X-Y de l'agrafe 2 passant par les axes X et Y et perpendiculaire au plan X-Z.

Chaque griffe 14 fait saillie à partir de la face latérale externe 64 de la branche 6 correspondante. Ainsi, les griffes 14 sont situées chacune à l'extérieur des branches 6, autrement dit à l'opposé de l'autre branche 6. Dans le plan X-Z, chaque griffe 14 présente une section de forme triangulaire, délimitée par une face supérieure 14A, tournée vers le haut à l'opposé de la pointe en harpon 10 de la branche 6 et s'étendant perpendiculairement à cette branche, et par une surface inclinée 14B qui relie la face supérieure 14A à la face latérale externe 64 de la branche 6.

La largeur de chaque griffe 14, mesurée selon un axe Y perpendiculaire au plan X-Z, décroît entre l'extrémité supérieure 14E de la griffe 14, située du côté des appendices latéraux 8, et l'extrémité inférieure 14F de la griffe 14, située du côté la pointe en harpon 10. Ainsi, la largeur L14 de l'extrémité supérieure 14E de chaque griffe 14 constitue la largeur maximale de la griffe 14. Au niveau de l'extrémité inférieure 14F de la griffe 14, la largeur L'14 de la griffe 14 est égale à la largeur L6 de la branche 6, c'est-à-dire à la largeur des faces 64 et 68. La largeur L14 de l'extrémité supérieure 14E de chaque griffe 14 est strictement supérieure à la largeur L'14 de l'extrémité inférieure 14F de la griffe 14 et strictement supérieure à la largeur L6 de la branche 6. La largeur maximale L14 de chaque griffe 14 est donc strictement supérieure à la largeur L6 de la branche 6 correspondante. Autrement dit, la largeur L14 de l'agrafe 2, mesurée au niveau de chaque griffe 14, est strictement supérieure à la largeur maximale L6 de la branche 6 correspondante, considérée entre la pointe en harpon 10 et l'appendice 8 de cette branche 6, sauf au niveau de l'extrémité inférieure 14F des griffes 14.

La largeur maximale L6 de chaque branche est mesurée dans une zone Z1 représentée à la figure 5 et s'étendant, le long de la branche 6 correspondante, jusqu'à 5 mm de part et d'autre de la surface supérieure 14A.

Chaque griffe 14 comporte une partie antérieure 14C qui dépasse de la face avant 62 de la branche 6 correspondante, selon l'axe Y, du côté de la face avant AV de l'agrafe 2, ainsi qu'une partie postérieure 14D qui dépasse de la face arrière 64 de la branche 6 correspondante, du côté de la face arrière AR de l'agrafe 2.

On note S1, l'arête de la partie antérieure 14C de la griffe 14, la plus éloignée de la face avant 62 de la branche 6 correspondante. On note S2, l'arête de la partie postérieure 14D de chaque griffe 14, la plus éloignée de la face arrière 66 de la branche 6 correspondante. Les arêtes S1 et S2 délimitent la face supérieure 14A des griffes 14, autrement dit, elles délimitent la partie la plus large des griffes 14.

La largeur maximale L6 de chaque branche 6 est donc mesurée dans une zone Z1 s'étendant, le long de la branche 6 correspondante, jusqu'à 5 mm de part et d'autre de l'arête S1 ou S2 la plus éloignée de la face avant 62 ou de la face arrière 66.

On note D, le dépassement minimum de chaque griffe 14, par rapport à la face avant 62 de la branche 6 correspondante, mesuré selon l'axe Y et dans la zone Z1. Le dépassement D est mesuré entre l'arrête S1 et la face avant 62. De préférence, le dépassement D est compris entre 0,5 mm et 3 mm.

De la même manière, le dépassement minimum D de la griffe d'accrochage 14 par rapport à la face arrière 66 de la branche 6, mesuré selon l'axe Y et dans la zone Z1, est compris entre 0,5 mm et 3 mm.

L'agrafe 2 est spécialement conçue pour améliorer son pouvoir d'accrochage dans une dalle isolante 3, représentée à la figure 3 uniquement. La dalle 3 comporte une plaque inférieure 5 poreuse et friable, réalisée par exemple en polyuréthane ou polystyrène et recouverte par une feuille de finition métallique 7, telle qu'une feuille d'aluminium, permettant d'améliorer le pouvoir isolant de la dalle 3. En général, l'épaisseur de la feuille métallique est de l'ordre d'environ 0,3 ou 0,4 mm, voire 1 mm. La feuille métallique 7 est semi-rigide. En d'autres termes, elle est déformable élastiquement, c'est-à-dire qu'elle a tendance à reprendre sa forme initiale lorsqu'elle est pliée.

Le fonctionnement est le suivant : lors de l'enfoncement de l'agrafe 2 dans la dalle isolante 3 au moyen d'un dispositif de pose, les pointes en harpon 10 perforent la feuille métallique 7 et pénètrent dans la plaque 5 en réalisant un orifice 18 dans la feuille métallique 7. Les pointes en harpon 10 s'ancrent dans la matière de la plaque 5 afin de verrouiller la fixation de l'agrafe 2 et du câble ou tube 16 destiné à l'installation de chauffage.

En cas de début d'arrachement accidentel de l'agrafe 2, une force F s'exerce sur l'agrafe 2, dirigée vers le haut, dans le sens de l'extraction de l'agrafe 2 de la dalle isolante 3. La face supérieure 14A de chaque griffe 14 vient alors en appui contre la face inférieure 7B de la feuille 7, tournée du côté de la dalle 5.

Par conséquent, la résistance de l'agrafe 2 à la force d'arrachement F est améliorée. En particulier, l'agrafe 2 reste ancrée dans la dalle 3 malgré la porosité et la friabilité de la matière de la plaque 5, qui ne permet pas aux pointes en harpon 10 de s'ancrer de manière satisfaisante.

En effet, les parties antérieure 14C et postérieure 14D des griffes 14 sont retenues par la partie de la feuille 7 qui borde les orifices 18, au niveau des faces avant AV et arrière AR de l'agrafe 2, puisqu'aucune partie des branches 6 et des pointes en harpon 10 ne détériore la feuille 7 à ce niveau lors de l'enfoncement de l'agrafe 2. En particulier, l'ailette latérale externe 12 de chaque pointe en harpon 10, qui est située à l'extérieur des branches 6, en dessous de la griffe 14 correspondante, a une largeur maximale L12 inférieure ou égale à la largeur maximale L6 de la branche 6 correspondante et strictement inférieure à la largeur maximale L14 de la griffe 14 correspondante.

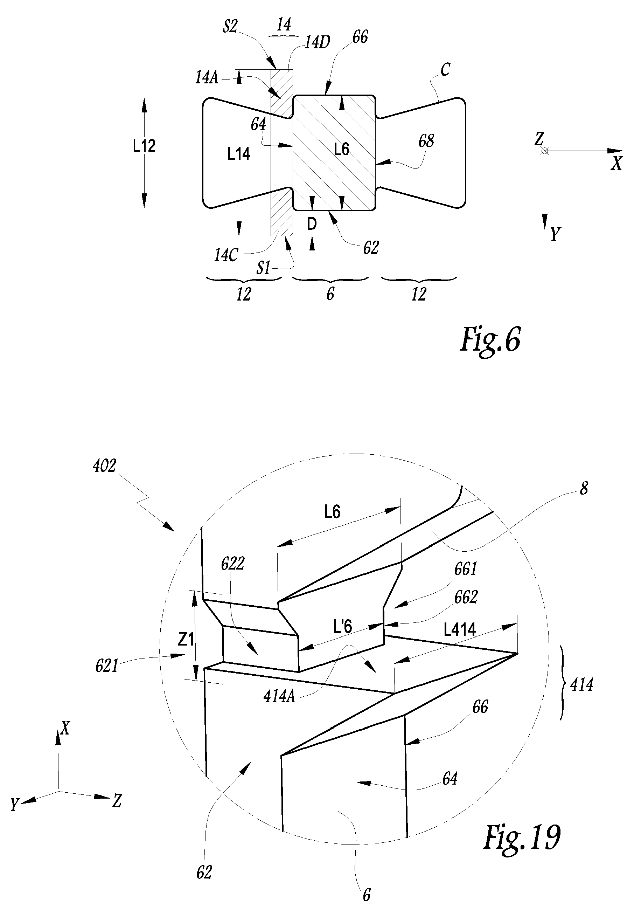

Comme représenté à la figure 6, les griffes 14 sont aptes à s'accrocher dans la feuille 7 car les parties 14C et 14D, hachurées pour la clarté de la figure, dépassent du contour C formé par la projection de la branche 6 et des ailettes 12, dans le plan Y-Z. Lorsque la pointe en harpon 10 pénètre dans la feuille 7, elle réalise un orifice 18 qui a sensiblement la même géométrie que le contour C de la figure 6. Puis, lorsqu'on continue à enfoncer l'agrafe 2, les griffes 14 traversent l'orifice 18. Plus précisément, les parties 14C et 14D déchirent un bord de l'orifice 18 qui n'a pas encore été perforé par les pointes en harpon 10, dans la mesure où ces parties 14C et 14D sont dépassantes. Au contraire, la partie centrale des griffes 14, qui est située entre les parties 14C et 14D, pénètre dans l'orifice 18 au niveau d'une zone qui a déjà été perforée par les pointes en harpon 10. Par conséquent, cette partie centrale des griffes 14 détériore la feuille 7. En cas d'arrachement accidentel de l'agrafe 2, la partie centrale des griffes 14 n'est pas efficace pour retenir l'agrafe 2 en dessous de la feuille 7, dans la mesure où la feuille 7 a été détériorée à la fois par le passage de la pointe en harpon 10 et par le passage de la partie centrale des griffes 14. Grâce à l'invention, les parties 14C et 14D des griffes 14 sont efficaces pour empêcher l'arrachement accidentel de l'agrafe 2, puisqu'à leur niveau, la feuille 7 est suffisamment intacte pour permettre aux griffes 14 de s'accrocher dans le bord de l'orifice 18.

Par extension, les griffes 14 sont efficaces lorsqu'elles comprennent une partie qui dépasse du contour de l'orifice formé par la perforation de la pointe en harpon 10.

Selon l'invention, la condition selon laquelle les griffes 14 dépassent du contour C peut se substituer à la condition selon laquelle la largeur maximale L12 de l'ailette 12 située à l'aplomb de chaque griffe 14 est strictement inférieure à la largeur maximale L14 de la griffe 14 correspondante. En effet, cela revient également à dire que les griffes 14 sont dépassantes, et donc efficaces pour retenir l'agrafe 2 par accrochage des griffes 14 dans la feuille métallique 7. Par « situé à l'aplomb », on entend que l'ailette 12 est alignée selon l'axe X, c'est-à-dire selon la direction de la branche 6, avec la griffe 14.

Par ailleurs, le pouvoir d'accrochage des griffes 14 est satisfaisant dans la mesure où les faces supérieures 14A des griffes 14 sont débouchantes selon l'axe Z, dans les deux sens. Autrement dit, aucune partie de l'agrafe 2 ne se trouve dans le prolongement des griffes 14, en particulier dans le prolongement des faces supérieures 14A, selon l'axe Z, à la fois vers l'espace libre de réception du tube ou du câble 16 et du côté de l'espace situé à l'extérieur des branches 6. En d'autres termes, les faces supérieures 14A des griffes 14 s'étendent chacune jusqu'aux faces latérales externe 64 et interne 68 sans obstacle.

En variante, les griffes 14 sont débouchantes selon l'axe Z, dans un seul sens, c'est-à-dire en direction de l'espace libre de réception du tube ou du câble 14 ou en direction de l'espace situé à l'extérieur des branches 6. Dans ce cas, une partie de l'agrafe 2 fait obstacle, soit selon l'axe Z et en direction de l'espace libre de réception du tube ou du câble 14, soit en direction de l'espace situé à l'extérieur des branches 6.

On note L, la largeur de la zone de réception du tube ou de l'agrafe 16, mesurée parallèlement à l'axe Z, entre les branches 6. La largeur L est mesurée au niveau de la jonction entre la partie courbe 4 et les branches 6, au-dessus des griffes 14.

La distance d entre, d'une part, la surface de la partie courbe 4 de l'agrafe qui est orientée vers l'extrémité inférieure 2B de l'agrafe 2 et, d'autre part, l'extrémité supérieure 14E de chaque griffe 14, mesurée le long de l'axe X, est inférieure à 110 % de la largeur L. L'agrafe 2 peut donc être utilisée pour la plupart des tubes ou des câbles. Par exemple, pour des tubes 16 ayant un diamètre de 16 mm, la distance d est choisie égale à 16 mm et, pour un câble électrique ayant un diamètre de 4 mm, la distance d est choisie égale à 4 mm.

Les appendices latéraux 8 ne sont pas considérés comme des griffes d'accrochage, dans la mesure où ils ne pénètrent pas dans la dalle 3 lors de l'utilisation de l'agrafe 2. Plus précisément, leur surface supérieure ne pénètre pas dans la dalle 3. Conformément à la présente invention, on considère comme griffe toute partie d'une agrafe qui présente une face supérieure qui pénètre dans la dalle 3, en dessous de la feuille 7.

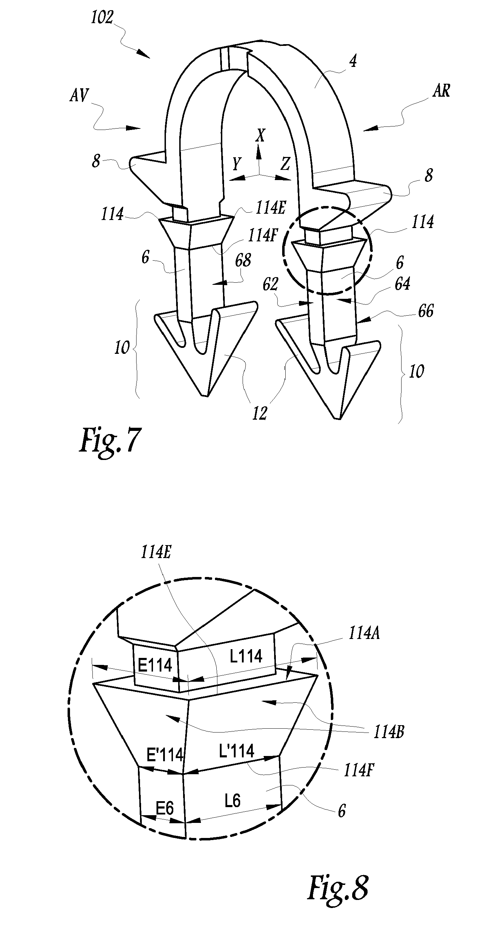

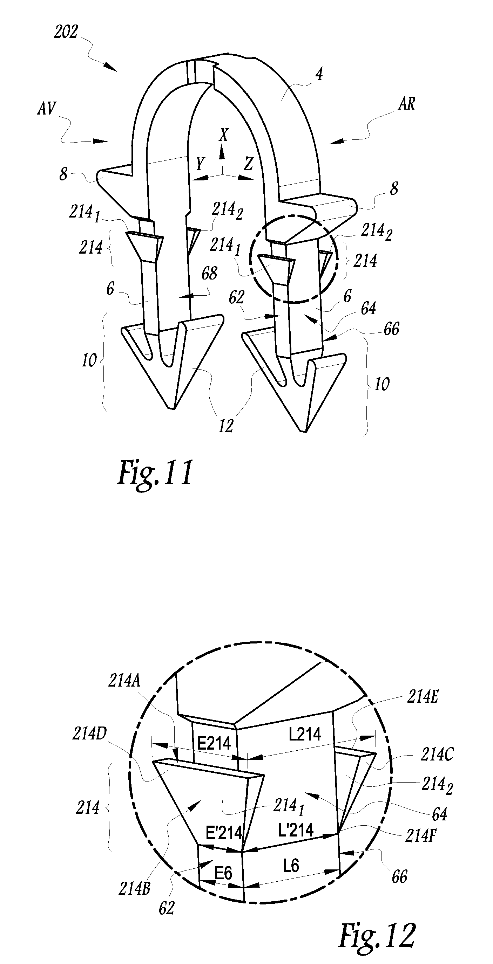

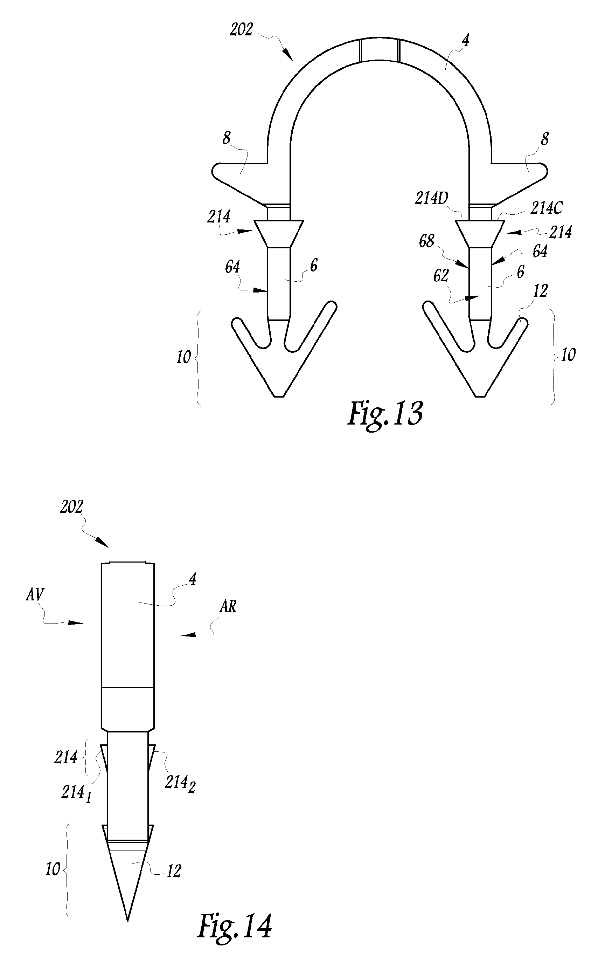

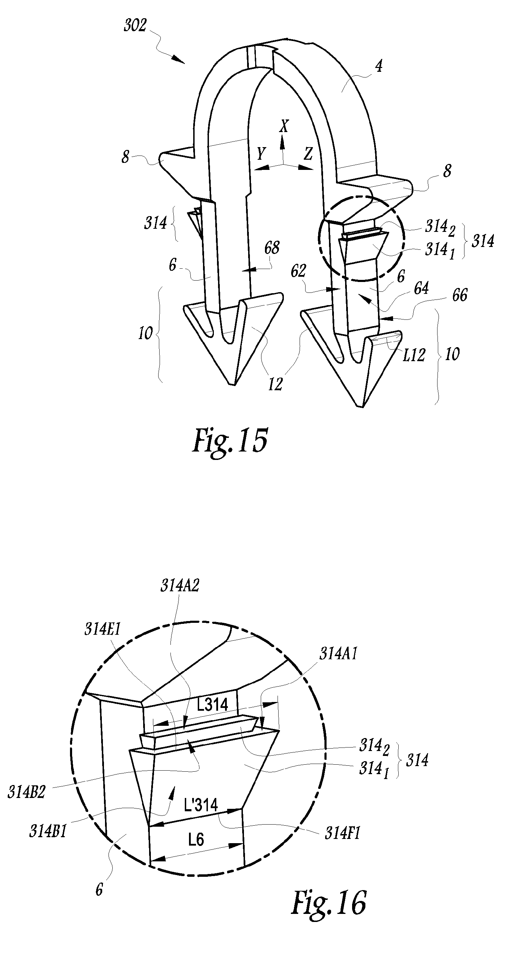

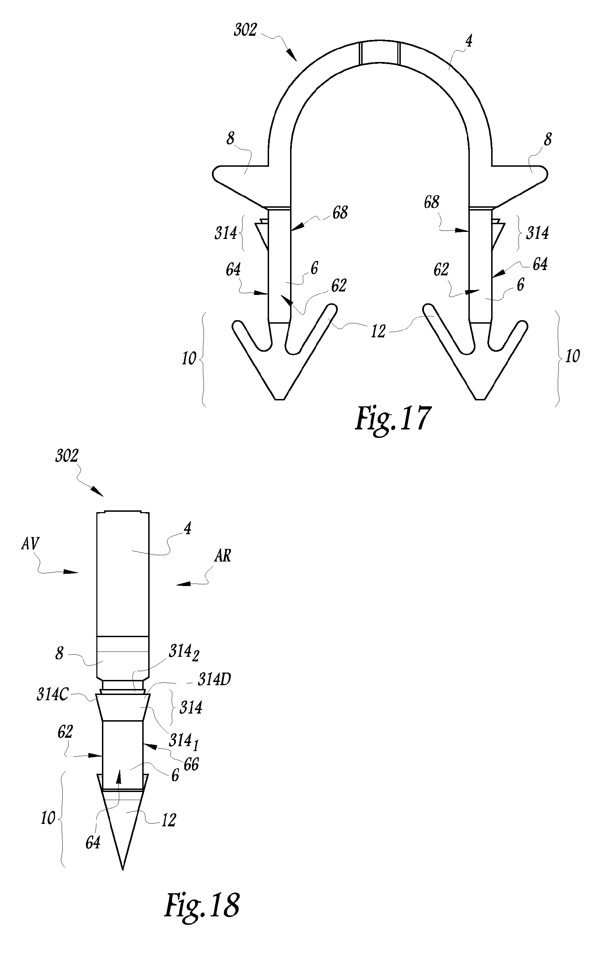

Les griffes 14 constituent un renfort structurel des branches 6, améliorant la résistance mécanique des branches 6.Les figures 6 à 18 représentent des agrafes 102, 202, 302 et 402 conformes à un deuxième, un troisième, un quatrième et un cinquième mode de réalisation de l'invention, dans lequel les éléments semblables à ceux du premier mode portent les mêmes références numériques.

Ainsi, chacune des agrafes 102, 202, 302 et 402 présente, selon un plan X-Z, une forme en U comportant une partie médiane courbe 4 et deux branches 6 parallèles. Aux jonctions entre la partie médiane 4 et les branches 6, l'agrafe 2 comporte deux appendices latéraux 8. Chacune des branches 6 est terminée par une pointe en harpon 10 qui comporte deux ailettes obliques 12 formant un "V". Chaque branche 6 est à section rectangulaire et est délimitée par quatre faces perpendiculaires 62, 64, 66, et 68.

Chaque branche 6 de l'agrafe 102 comporte une griffe ou collerette 114 située, le long de la branche 6, entre la pointe en harpon 10 et l'appendice latéral 8 de cette branche.

Les collerettes 114 s'étendent chacune sur la totalité de la périphérie de la branche 6, c'est-à-dire à la fois sur chacune des faces 62, 64, 66 et 68 de la branche 6. En d'autres termes, chaque collerette 114 s'étend en partie à partir de la face avant AV de l'agrafe 102. De plus, chaque collerette 114 s'étend au moins en partie entre les deux branches 6 de l'agrafe. En outre, chaque griffe 114 dépasse, selon l'axe Y, de la face avant 62 et de la face arrière 66 de la branche 6.

Chaque collerette 114 comprend quatre parties reliées entre elles, chaque partie faisant saillie à partir de l'une des faces 62, 64, 66 ou 68 de la branche 6 correspondante. En section, chacune des parties de la collerette 114 est de forme triangulaire et présente une face supérieure 114A perpendiculaire à la branche 6, tournée vers la partie médiane 4, ainsi qu'une surface inclinée 114B qui relie la face supérieure 114A à la face correspondante 62, 64, 66 ou 68 de la branche 6.

La largeur de chaque collerette 114, mesurée perpendiculairement au plan X-Z, décroît entre l'extrémité supérieure 114E de la collerette 114, située du côté des appendices latéraux 8, et l'extrémité inférieure 114F de la collerette 114, située du côté la pointe en harpon 10. Ainsi, la largeur L114 de l'extrémité supérieure 114E de chaque collerette 114 constitue la largeur maximale de la collerette 114. Au niveau de l'extrémité inférieure 114F, la largeur de la collerette 114 est égale à la largeur L6 de la branche 6, c'est-à-dire à la largeur des faces 64 et 68. La largeur L114 de l'extrémité supérieure 114E de chaque collerette 114 est strictement supérieure à la largeur de l'extrémité inférieure 114F de la collerette 114 et strictement supérieure à la largeur L6 de la branche 6 correspondante. La largeur maximale L114 de chaque collerette 114 est donc strictement supérieure à la largeur L6 de la branche 6 correspondante. Autrement dit, la largeur L114 de l'agrafe 2, mesurée au niveau de chaque collerette 114, est strictement supérieure à la largeur maximale L6 de la branche 6 correspondante, considérée entre la pointe en harpon 10 et l'appendice 8 de cette branche 6, sauf au niveau de l'extrémité inférieure 114F de la collerette 114.

L'épaisseur E114 de chaque collerette 114, mesurée dans le plan X-Z selon une direction Z perpendiculaire aux branches 6, décroît entre l'extrémité supérieure 114E et l'extrémité inférieure 114F de la collerette 114. Ainsi, l'épaisseur E114 de l'extrémité supérieure 114E de chaque collerette 114 constitue l'épaisseur maximale de la collerette 114. L'épaisseur maximale E114 de chaque collerette 114 est strictement supérieure à l'épaisseur E6 de la branche 6 correspondante. Au niveau de l'extrémité inférieure 114F, l'épaisseur E'114 de la collerette 114 est égale à l'épaisseur E6 de la branche 6, c'est-à-dire à l'épaisseur des faces 62 et 66. L'épaisseur E114 de l'extrémité supérieure 114E de chaque collerette 114 est strictement supérieure à l'épaisseur de l'extrémité inférieure 114F de la collerette 114 et strictement supérieure à l'épaisseur E6 de la branche 6. Autrement dit, l'épaisseur E114 de l'agrafe 2, mesurée au niveau de chaque collerette 114, est strictement supérieure à l'épaisseur maximale E6 de la branche 6 correspondante, considérée entre la pointe en harpon 10 et l'appendice 8 de cette branche 6, sauf au niveau de l'extrémité inférieure 114F des collerettes 114 où l'épaisseur E'114 des collerettes est égale à l'épaisseur E6 des branches 6.

Le fonctionnement de l'agrafe 102 est analogue au fonctionnement de l'agrafe 2. En cas d'arrachement accidentel de l'agrafe 2 hors de la dalle isolante, la face supérieure 114A de chaque collerette 114 vient en appui contre la face inférieure de la feuille métallique de la dalle. Par conséquent, la résistance de l'agrafe 2 à la force d'arrachement est améliorée. En effet, chaque collerette 114 est retenue par la partie de la feuille métallique qui borde les orifices réalisés par les pointes en harpon 10 dans la feuille métallique lors de l'enfoncement de l'agrafe 2.

La collerette 114 de l'agrafe 102 offre l'avantage d'obturer l'orifice pratiqué par les pointes en harpon 10, empêchant le ciment de s'y engager lors du coulage de la chape du plancher chauffant. Ceci empêche la création de ponts thermiques dans la masse de l'isolant.

Chaque branche 6 de l'agrafe 202 comporte une griffe 214 située, le long de la branche 6, entre la pointe en harpon 10 et l'appendice latéral 8 de cette branche. Plus précisément, chaque griffe 214 comporte une partie antérieure 214₁ qui dépasse de la face avant 62 de la branche 6, ainsi qu'une partie postérieure 214₂ qui dépasse de la face arrière 66 de la branche 6, selon l'axe Y. En d'autres termes, les griffes 214 s'étendent à la fois à partir de la face arrière AR et de la face avant AV de l'agrafe 202. Dans un plan médian X-Y de l'agrafe 2, perpendiculaire au plan X-Z et parallèle à la direction des branches 6, chaque partie 214₁ et 214₂ des griffes 214 présente une section de forme triangulaire, délimitée par une surface supérieure 214A, tournée à l'opposé de la pointe en harpon 10 de la branche 6 et s'étendant perpendiculairement à cette branche, et par une surface inclinée 214B qui relie la face supérieure 214A à la face 62 ou 66 correspondante de la branche 6.

L'épaisseur de chaque griffe 214, mesurée selon l'axe Z dans le plan X-Z et perpendiculairement à la direction des branches 6, décroît entre l'extrémité supérieure 214E de la griffe 214, située du côté des appendices latéraux 8, et l'extrémité inférieure 214F de la griffe 214, située du côté la pointe en harpon 10. Ainsi, l'épaisseur E214 de l'extrémité supérieure 214E de chaque griffe 214 constitue l'épaisseur maximale de la griffe 214. Au niveau de l'extrémité inférieure 214F de la griffe 14, l'épaisseur E'214 de chaque griffe 214 est égale à l'épaisseur E6 de la branche 6, c'est-à-dire à l'épaisseur des faces 62 et 66. L'épaisseur E214 de l'extrémité supérieure 214E de chaque griffe 214 est strictement supérieure à l'épaisseur E'214 de l'extrémité inférieure 214F de la griffe 214 et strictement supérieure à l'épaisseur E6 de la branche 6, sauf au niveau de l'extrémité inférieure de la griffe 214. L'épaisseur maximale E214 de chaque griffe 214 ou 214' est donc strictement supérieure à l'épaisseur E6 de la branche 6 correspondante, sauf au niveau de l'extrémité inférieure de la griffe 214.

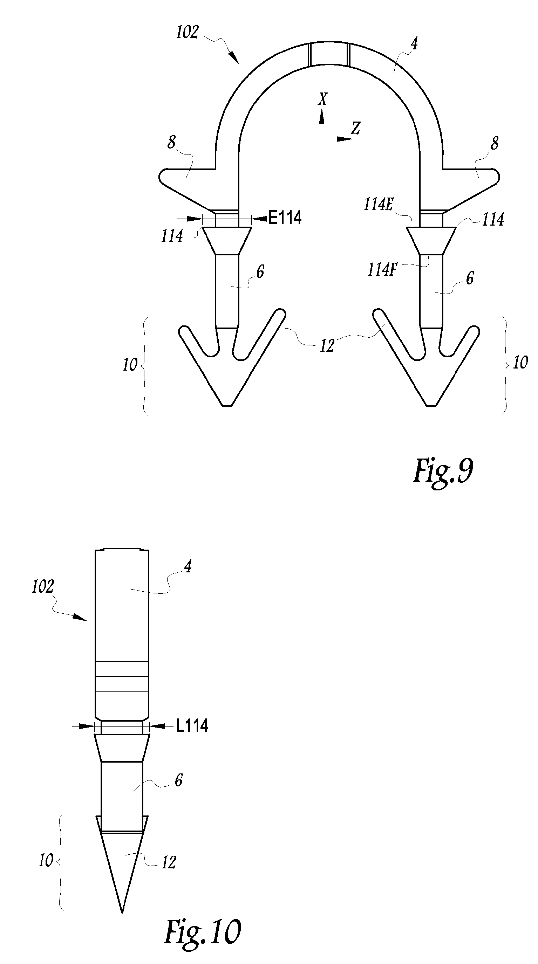

Dans l'exemple représenté aux figures 10 à 13, l'épaisseur E6 de chaque branche 6 est constante entre la pointe en harpon 10 et l'appendice latéral 8. En alternative, l'épaisseur E6 de la branche 6 n'est pas constante et l'épaisseur maximale E214 de chaque griffe 214 est alors choisie strictement supérieure à l'épaisseur maximale E6 de la branche 6, dans la zone Z1 telle que décrite en référence à la figure 5.

Chaque partie 214₁ et 214₂ des griffes 214 comporte une partie latérale externe 214C qui dépasse de la face latérale externe 64 de la branche 6 correspondante, à l'extérieur des branches 6, ainsi qu'une partie latérale interne 214D qui dépasse de la face latérale interne 68 de la branche 6 correspondante, en direction de l'autre branche 6, selon l'axe Z. Chaque griffe 214 s'étend ainsi au moins en partie entre les deux branches 6 de l'agrafe.

De cette manière, la largeur L214 de l'agrafe 202, mesurée au niveau de chaque griffe 214, est strictement supérieure à la largeur maximale L6 de la branche 6 correspondante, considérée entre la pointe en harpon 10 et l'appendice 8 de cette branche 6.

De manière analogue aux agrafes 2 et 102, l'agrafe 202 est spécialement conçue pour améliorer son pouvoir d'accrochage dans une dalle isolante comportant une plaque inférieure poreuse et friable, réalisée par exemple en polyuréthane ou polystyrène et recouverte par une feuille métallique, telle qu'une feuille d'aluminium.

Lors de l'enfoncement de l'agrafe 202 dans la dalle isolante, au moyen d'un dispositif de pose, les pointes en harpon 10 perforent la feuille métallique et pénètrent dans la plaque en réalisant un orifice dans la feuille métallique. Les pointes en harpon 10 s'ancrent dans la matière de la plaque afin de verrouiller la fixation de l'agrafe 2.

En cas de début d'arrachement accidentel de l'agrafe 202, la face supérieure 214A des parties 214₁ et 214₂ de chaque griffe 214 vient en appui contre la face inférieure de la feuille métallique. Par conséquent, la résistance de l'agrafe 202 à la force d'arrachement est améliorée. En effet, les parties 214C et 214D des griffes 214 sont retenues par la partie de la feuille métallique qui borde les orifices, au niveau des faces AV et AR de l'agrafe 202, puisqu'aucune partie des branches 6 et des pointes en harpon 10 ne détériore la feuille métallique à ce niveau.

En variante non représentée, chaque griffe 214 comporte une seule partie 214₁ ou 214₂. Dans ce cas, l'épaisseur des griffes 214 est mesurée à partir de la face avant 62 ou arrière 66 de la branche, opposée à la griffe 214.

Chaque branche 6 de l'agrafe 302 comporte une griffe latérale 314 située, le long de la branche 6, entre la pointe en harpon 10 et l'appendice latéral 8 de cette branche. Chaque griffe 314 fait saillie à partir de la face latérale externe 64 de la branche 6, selon l'axe Z. Ainsi, les griffes 314 sont situées à l'extérieur des branches 6.

Chaque griffe 314 est « étagée » et comporte une partie principale inférieure 314₁ et une partie supérieure 314₂. La partie principale 314₁ de chaque griffe 314 est analogue à la griffe 14 de l'agrafe 2 et présente, dans le plan X-Z, une section de forme triangulaire, délimitée par une face supérieure 314A1, tournée à l'opposé de la pointe en harpon 10 de la branche 6 et s'étendant perpendiculairement à cette branche, et par une face inclinée 314B qui relie la face supérieure 314A à la face latérale 66 de la branche 6.

La largeur de la partie principale 314₁ de chaque griffe 314, mesurée perpendiculairement au plan X-Z, décroît entre l'extrémité supérieure 314E1 de la partie principale 314₁ et l'extrémité inférieure 314F1 de la partie principale 314₁. Ainsi, la largeur L314 de l'extrémité supérieure 314E1 de chaque partie principale 314₁ constitue la largeur maximale de la partie principale 314₁. Au niveau de l'extrémité inférieure 314F1 de la partie principale 314₁, la largeur L'314 de la partie principale 314₁ est égale à la largeur L6 de la branche 6, c'est-à-dire à la largeur des faces latérale et interne 64 et 68. La largeur L314 de l'extrémité supérieure 314E1 de chaque partie principale 314₁ est strictement supérieure à la largeur de l'extrémité inférieure 314F1 de la partie principale 314₁ et strictement supérieure à la largeur L6 de la branche 6. La largeur maximale L314 de chaque griffe 14 est donc strictement supérieure à la largeur L6 de la branche 6 correspondante, sauf au niveau de l'extrémité inférieure 314F1 de la griffe 314.

La partie supérieure 314₂ de chaque griffe 314 est raccordée à la face supérieure 314A1 de la partie supérieure 314₁ et à la face latérale 66 de la branche 6. La partie supérieure 314₂ présente, dans le plan X-Z, une section de forme triangulaire, délimitée par une surface supérieure 314A2, tournée à l'opposé de la pointe en harpon 10 de la branche 6 et s'étendant perpendiculairement à cette branche, et par une surface inclinée 314B2 qui relie la face supérieure 314A1 à la face supérieure 314A1 de la partie principale 314₁.

La largeur de la partie supérieure 314₂ de chaque griffe 314, mesurée perpendiculairement au plan X-Z, est inférieure à la largeur maximale L314 de la partie principale 314₁. Ainsi, la largeur maximale L314 de chaque griffe 314 est strictement supérieure à la largeur L6 de la branche 6 correspondante, sauf au niveau de l'extrémité inférieure 314F1 de la griffe 314. De plus, la largeur L314 de l'agrafe 2, mesurée au niveau de chaque griffe 314, est strictement supérieure à la largeur maximale L6 de la branche 6 correspondante, considérée dans la zone Z1 décrite en référence à la figure 5, sauf au niveau de l'extrémité inférieure 314F1 de la griffe 314.

Chaque griffe 314 comporte une partie antérieure 314C qui dépasse selon l'axe Y de la face avant 62 de la branche 6 correspondante, du côté de la face avant AV de l'agrafe 302, ainsi qu'une partie postérieure 314D qui dépasse selon l'axe Y de la face arrière 64 de la branche 6 correspondante, du côté de la face arrière AR de l'agrafe 302.

Le fonctionnement est analogue à celui des agrafes 2, 102 et 202 : lors de l'enfoncement de l'agrafe 302 dans une dalle isolante recouverte d'une feuille métallique, au moyen d'un dispositif de pose, les pointes en harpon 10 perforent la feuille métallique et pénètrent dans la dalle en réalisant un orifice dans la feuille métallique. Les pointes en harpon 10 s'ancrent dans la matière de la dalle afin de verrouiller la fixation de l'agrafe 302.

Lorsque les pointes en harpon 10 perforent la feuille métallique, la feuille métallique se déchire et a tendance à se rabattre vers le fond des orifices, formant une paroi verticale qui borde l'intérieur de l'orifice.

En cas de début d'arrachement accidentel de l'agrafe 302, une force s'exerce sur l'agrafe 302, dirigée dans le sens de l'extraction de l'agrafe 302 de la dalle isolante. La face supérieure 314A1 de la partie 314₁ de chaque griffe 314 sont alors susceptibles chacune de venir en appui contre une extrémité libre verticale de la feuille métallique, qui a été rabattue verticalement suite à la perforation de la feuille métallique par la pointe en harpon 10. La face inférieure de la griffe 314₂ a une fonction de retenue de cette extrémité libre verticale de la feuille métallique, empêchant cette extrémité verticale de se replier vers le haut, dans sa position horizontale initiale, ce qui libérerait l'agrafe 2 de l'emprise de la feuille métallique.

De plus, l'extrémité de la feuille métallique 7 ainsi maintenue en position verticale forme, avec la partie de la feuille métallique 7 restée horizontale et adhésive sur le corps isolant) une forme en équerre qui renforce périmétralement, autour de l'orifice 18, la résistance de la feuille métallique dans son opposition à l'arrachage de l'agrafe.

En particulier, l'agrafe 2 reste ancrée dans la dalle malgré la porosité et la friabilité de la matière de la dalle, qui ne permet pas aux pointes en harpon 10 de s'ancrer de manière satisfaisante.

En effet, les parties antérieure 314C et postérieure 314D des griffes 314 sont retenues par la partie de la feuille qui borde les orifices, au niveau des faces AV et AR de l'agrafe 302, puisqu'aucune partie des branches 6 et des pointes en harpon 10 ne détériore la feuille métallique à ce niveau, les ailettes latérales externes 12 ayant, à l'aplomb des griffes 314, une largeur maximale L12 inférieure ou égale à la largeur L6 des branches 6 et strictement inférieure à la largeur maximale L314 des griffes 314.

Les faces avant 62 et arrière 66 de l'agrafe 402 de la figure 19 ne sont pas planes. Une encoche 621 est ménagée dans la face avant 62 et une encoche 661 est ménagée dans la face arrière 66. Le fond 622 de l'encoche 621 est en retrait, le long de l'axe Y et en direction de la face arrière 66, par rapport à la partie restante de la face avant 62 de la branche 6. De même, le fond 662 de l'encoche 661 est en retrait, le long de l'axe Y et en direction de la face avant 62, par rapport à la partie restante de la face arrière 66 de la branche 6. Les encoches 621 et 661 sont réalisées dans le prolongement d'une face supérieure 414A des griffes 414.

Ainsi, les griffes 414 dépassent, selon la direction Y, d'une zone 622 de la face avant 62 et d'une zone 662 de la face arrière 66 de la branche 6, ces zones étant constituées par le fond 622 ou 662 des encoches 621 et 661. En variante, les griffes 414 dépassent, selon la direction Y, d'une zone 622 de la face avant 62 ou d'une zone 662 de la face arrière 66 de la branche 6.

A la figure 19, les zones en retrait 622 et 662 sont planes et ont donc une surface non nulle. En alternative, le fond des encoches 621 et 661 peut être une arête, c'est-à-dire que les encoches 621 et 661 sont à section triangulaire. Dans ce cas, les zones en retrait ont, en théorie, une surface nulle.

Pour les agrafes 2, 102, 202 et 302, les griffes dépassent, selon la direction Y, d'une zone de la face avant 62 et/ou d'une zone de la face arrière 66, ces zones étant constituées par la totalité de la face avant 62 ou de la face arrière 66, dans la mesure où ces faces 62 et 66 sont planes.

Les zones en retrait 622 et 662 sont situées dans la zone Z1 représentée à la figure 5, c'est-à-dire que les zones en retrait 622 et 662 s'étendent, le long de la branche 6 correspondante, jusqu'à 5 mm de part et d'autre de la surface supérieure 414A de la griffe 414.

On note L'6 la largeur minimale débouchante de la branche 6, dans la zone Z1. La largeur minimale L'6 est mesurée au entre les fonds 622 et 662 des encoches 621 et 661. Cette largeur L'6 est « débouchante » dans la mesure où aucune partie de l'agrafe 402 de fait obstacle aux fonds 622 et 662, le long de l'axe Z. La largeur maximale L414 de la griffe 414, mesurée selon l'axe Y, est strictement supérieure à la largeur minimale débouchante L'6 de la branche 6, mesurée dans la zone Z1.

En variante non représentée, les faces supérieures 314A1 et 314A2 des griffes 314 ne sont pas perpendiculaires à la direction des branches 6. Par exemple, l'angle dièdre formé par l'espace délimité entre, d'une part, la face supérieure 314A1 et/ou 314A2 et, d'autre part, la face latérale externe 62 de la branche 6 correspondante

En variante non représentée, au moins une pointe en harpon 10 comprend un nombre d'ailettes 12 différent de deux, notamment une seule ailette ou au moins trois ailettes.

En variante non représentée, seule une branche 6 comporte une griffe 14, 114, 214, 214' ou 314.

En variante, la feuille métallique 7 est remplacée par une feuille de finition non métallique, notamment une feuille synthétique, une feuille en fibres de verre ou en de carbone. En alternative, il peut s'agir d'un film de finition pouvant être rapporté sur la plaque 5 par pulvérisation ou étalage, notamment un film de résine. Une fois sec, ce film constitue une feuille de finition.

En variante non représentée, la section des branches n'est pas carrée. Elle peut être notamment circulaire ou ovale.

Selon l'invention, les griffes peuvent avoir une forme qui n'est pas représentée sur les figures, dans la mesure où :
- elles sont situées entre la partie médiane courbe 4 et la pointe en harpon 10, et
- elles dépassent, selon la direction Y, d'une zone 622 de la face avant 62 et/ou d'une zone 662 de la face arrière 66 de la branche 6, située dans une zone Z1 s'étendant, le long de la branche 6, jusqu'à 5 mm de part et d'autre de la partie S1 ou S2 de la griffe d'accrochage la plus éloignée de la zone 622 de la face avant 62 et/ou de la zone 662 de la face arrière 66,
   ou
- la largeur maximale L14 de la griffe est strictement supérieure à la largeur maximale L12 de l'ailette 12 s'étendant à l'aplomb de la griffe.

Pour une efficacité maximale, les griffes présentent une face supérieure suffisamment étendue pour opposer une force suffisante à l'encontre de la feuille de finition 7 sans la déchirer, et la forme des griffes est compatible avec la pénétration de la dalle isolante 3.

Dans le cadre de l'invention, telle que définie par les revendications, les caractéristiques des différents modes de réalisation peuvent être combinées entre elles, au moins partiellement.

## Revendications

1. Agrafe (2 ; 102 ; 202 ; 302 ; 402) de fixation de tubes ou de câbles (16) sur une structure porteuse (3) comprenant une plaque (5) recouverte d'une feuille de finition (7), l'agrafe (2 ; 102 ; 202 ; 302 ; 402) présentant, dans un plan (X-Z), une forme en « U » et comportant deux branches (6) sensiblement parallèles reliées par une partie médiane courbe (4), chaque branche étant délimitée par au moins une face avant (62) et une face arrière (66) opposées, globalement parallèles au plan (X-Z), chaque branche étant terminée par une pointe en harpon (10) comprenant au moins une ailette (12) rattachée à cette branche, au moins une branche comportant une griffe d'accrochage (14 ; 114 ; 214 ; 314 ; 414) dans la feuille de finition (7), qui est située entre la partie médiane courbe et la pointe en harpon, **caractérisée en ce que** la griffe d'accrochage (14 ; 114 ; 214 ; 314 ; 414) dépasse, selon une direction (Y) perpendiculaire au plan (X-Z), d'une première zone (62, 622) de la face avant (62) et/ou d'une première zone (66, 662) de la face arrière (66) de la branche, situées dans une deuxième zone (Z1) s'étendant, le long de la branche (6), jusqu'à 5 mm de part et d'autre de la partie (S1, S2) de la griffe d'accrochage la plus éloignée de la première zone (62, 622) de la face avant (62) et/ou de la première zone (66, 662) de la face arrière (66), et **en ce qu'**aucune partie de l'agrafe ne se trouve dans le prolongement de la griffe d'accrochage, selon une direction (Z) perpendiculaire aux deux branches (6), dans un premier sens allant de l'espace libre situé entre les branches (6) et vers l'espace situé à l'extérieur des branches (6) et/ou dans un deuxième sens opposé au premier sens.

2. Agrafe (2 ; 102 ; 202 ; 302 ; 402) selon la revendication 1, **caractérisée en ce que** le dépassement minimum (D) de la griffe d'accrochage (14 ; 114 ; 214 ; 314 ; 414) par rapport à la première zone (62, 662) de la face avant (62) et/ou la première zone (66, 662) de la face arrière (66) de la branche (6), mesuré selon la direction (Y) perpendiculaire au plan (X-Z) et dans la deuxième zone (Z1), est compris entre 0,5 mm et 3 mm.

3. Agrafe (2 ; 102; 202; 302; 402) selon l'une des revendications 1 ou 2, **caractérisée en ce que** la largeur maximale (L14 ; L114 ; L214 ; L314 ; L414) de la griffe (14 ; 114 ; 214 ; 314 ; 414), mesurée selon la direction (Y) perpendiculaire au plan (X-Z), est strictement supérieure à la largeur minimale débouchante (L'6) de la branche (6), mesurée dans la deuxième zone (Z1).

4. Agrafe (102 ; 202) selon l'une des revendications 1 ou 2, **caractérisée en ce que** la griffe (114 ; 214) s'étend au moins en partie sur au moins la face avant (62) et/ou la face arrière (66) de la branche (6) et/ou au moins une face latérale externe (64) de la branche (6), tournée à l'opposé de l'autre branche et/ou une face latérale interne (68) de la branche, tournée en vis-à-vis de l'autre branche.

5. Agrafe (302) selon l'une des revendications précédentes, **caractérisée en ce que** la griffe (314) est étagée et comprend :
- une première partie (314₁) délimitée, du côté de la partie médiane courbe (4) et à l'opposé des pointes en harpon (10), par une face supérieure (314A1),
- une deuxième partie (314₂) qui est raccordée à la face supérieure (314A1) de la première partie (314₁).

6. Agrafe (102 ; 302) selon l'une des revendications précédentes, **caractérisée en ce que** la griffe (114 ; 314) s'étend au moins en partie entre les deux branches (6) de l'agrafe.

7. Agrafe (2 ; 102 ; 202 ; 302 ; 402) selon l'une des revendications précédentes, **caractérisée en ce que** la griffe (14 ; 114 ; 214 ; 314 ; 414) comporte au moins une face (14A ; 114A ; 214A ; 314A1, 314A2 ; 414A) d'appui contre la feuille de finition (7).

8. Agrafe (2 ; 102 ; 202 ; 302 ; 402) selon l'une des revendications précédentes, **caractérisée en ce que** la largeur maximale (L14 ; L114 ; L214 ; L314 ; L414) de la griffe d'accrochage (14 ; 114 ; 214 ; 314 ; 414) est strictement supérieure à la largeur maximale (L12) d'une ailette (12) s'étendant à l'aplomb de la griffe d'accrochage.

9. Agrafe (2 ; 102 ; 202 ; 302 ; 402) selon l'une des revendications précédentes, **caractérisée en ce que** la griffe (14 ; 114 ; 214 ; 314 ; 414) comprend au moins une partie (14C, 14D) qui dépasse du contour (C) formé par la projection de la branche (6) et de chaque ailette (12) correspondantes, dans un plan (Y-Z) perpendiculaire à la direction de la branche (6).

10. Utilisation d'une agrafe (2 ; 102; 202; 302; 402) selon l'une des revendications 1 à 9, pour la fixation de tubes ou de câbles (16) sur une structure porteuse (3) comprenant une plaque (5) recouverte d'une feuille de finition (7), **caractérisée en ce qu'**après la formation d'un orifice (18) par perforation de la feuille de finition (7) par les pointes en harpon (10) de l'agrafe (2 ; 102 ; 202 ; 303 ; 402), une partie (14C, 14D) de la griffe d'accrochage dépasse du contour de l'orifice (18).

## Patentansprüche

1. Klammer (2; 102; 202; 302; 402) zur Befestigung von Rohren oder Kabeln (16) an einer Trägerstruktur (3), die eine mit einer Deckfolie (7) bedeckte Platte (5) umfasst, wobei die Klammer (2; 102; 202; 302; 402) in einer Ebene (X-Z) eine U-Form aufweist und zwei im Wesentlichen parallele Schenkel (6) umfasst, die über ein gekrümmtes Mittelteil (4) verbunden sind, wobei jeder Schenkel durch mindestens eine Vorderfläche (62) und eine entgegengesetzt liegende Rückfläche (66) begrenzt ist, die in der Ebene (X-Z) im Wesentlichen parallel sind, jeder Schenkel in einer harpunenförmigen Spitze (10) endet, die mindestens eine an dem Schenkel angesetzte Rippe (12) umfasst, mindestens ein Schenkel ein Greifelement (14; 114; 214; 314; 414) zum Verhaken an der Deckfolie (7) aufweist, das zwischen dem gekrümmten Mittelteil und der harpunenförmigen Spitze liegt, **dadurch gekennzeichnet, dass** das Verhakungsgreifelement (14; 114; 214; 314; 414) gemäß einer Richtung (Y) senkrecht zur Ebene (X-Z) eine erste Zone (62, 622) der Vorderfläche (62) und/oder eine erste Zone (66, 662) der Rückfläche (66) des Schenkels überragt, die in einer zweiten Zone (Z1) liegen, die sich entlang des Schenkels (6) bis 5 mm beidseitig des Abschnitts (S1, S2) des Verhakungsgreifelements erstreckt, der am weitesten von der ersten Zone (62, 622) der Vorderfläche (62) und/oder von der ersten Zone (66, 662) der Rückfläche (66) entfernt ist, und dass kein Teil der Klammer sich in der Verlängerung des Verhakungsgreifelements gemäß einer Richtung (Z) senkrecht zu den zwei Schenkeln (6) in einem ersten Richtungssinn, der von dem zwischen den Schenkeln (6) liegenden freien Raum und zum außerhalb der Schenkel (6) liegenden Raum verläuft, und/oder in einem zweiten Richtungssinn entgegengesetzt zur ersten Richtungssinn erstreckt.

2. Klammer (2; 102; 202; 302; 402) nach Anspruch 1, **dadurch gekennzeichnet, dass** der minimale Überstand (D) des Verhakungsgreifelements (14; 114; 214; 314; 414) in Bezug auf die erste Zone (62, 662) der Vorderfläche (62) und/oder die erste Zone (66, 662) der Rückfläche (66) des Schenkels (6), gemessen gemäß der Richtung (Y) senkrecht zur Ebene (X-Z) und in der zweiten Zone (Z1), zwischen 0,5 mm und 3 mm liegt.

3. Klammer (2; 102; 202; 302; 402) nach einem der Ansprüche 1 oder 2, **dadurch gekennzeichnet, dass** die maximale Breite (L14; L114; L214; L314; L414) des Greifelements (14; 114; 214; 314; 414), gemessen gemäß der Richtung (Y) senkrecht zur Ebene (X-Z), streng größer als die ausmündende minimale Breite (L'6) des Schenkels (6) ist, die in der zweiten Zone (Z1) gemessen wird.

4. Klammer (102; 202) nach einem der Ansprüche 1 oder 2, **dadurch gekennzeichnet, dass** das Greifelement (114; 214) sich mindestens teilweise auf mindestens der Vorderfläche (62) und/oder der Rückfläche (66) des Schenkels (6) und/oder mindestens einer Außenseitenfläche (64) des Schenkels (6), entgegengesetzt gerichtet zum anderen Schenkel, und/oder einer Innenseitenfläche (68) des Schenkels, gegenüberliegend zum anderen Schenkel gerichtet, erstreckt.

5. Klammer (302) nach einem der vorhergehenden Ansprüche, **dadurch gekennzeichnet, dass** das Greifelement (314) stufenförmig ist und umfasst:
- ein erstes Teil (314₁), das auf der Seite des gekrümmten Mittelteils (4) und entgegengesetzt zu den harpunenförmigen Spitzen (10) durch eine obere Fläche (314A1) begrenzt ist,
- ein zweites Teil (314₂), das mit der oberen Fläche (314A1) des ersten Teils (314₁) verbunden ist.

6. Klammer (102; 302) nach einem der vorhergehenden Ansprüche, **dadurch gekennzeichnet, dass** das Greifelement (114; 314) sich mindestens teilweise zwischen den zwei Schenkeln (6) der Klammer erstreckt.

7. Klammer (2; 102; 202; 302; 402) nach einem der vorhergehenden Ansprüche, **dadurch gekennzeichnet, dass** das Greifelement (14; 114; 214; 314; 414) mindestens eine Fläche (14A; 114A; 214A; 314A1, 314A2; 414A) zur Abstützung gegen die Deckfolie (7) aufweist.

8. Klammer (2; 102; 202; 302; 402) nach einem der vorhergehenden Ansprüche, **dadurch gekennzeichnet, dass** die maximale Breite (L14; L114; L214; L314; L414) des Verhakungsgreifelements (14; 114; 214; 314; 414) streng größer als die maximale Breite (L12) einer Rippe (12) ist, die sich senkrecht zum Verhakungsgreifelement erstreckt.

9. Klammer (2; 102; 202; 302; 402) nach einem der vorhergehenden Ansprüche, **dadurch gekennzeichnet, dass** das Greifelement (14; 114; 214; 314; 414) mindestens ein Teil (14C, 14D) umfasst, das die Kontur (C) überragt, die durch die Projektion des Schenkels (6) und jeder entsprechenden Rippe (12) in einer Ebene (Y-Z) senkrecht zur Richtung des Schenkels (6) gebildet wird.

10. Verwendung einer Klammer (2; 102; 202; 302; 402) nach einem der Ansprüche 1 bis 9 für die Befestigung von Rohren oder Kabeln (16) auf einer Trägerstruktur (3), die eine mit einer Deckfolie (7) bedeckten Platte (5) umfasst, **dadurch gekennzeichnet, dass** nach der Bildung einer Öffnung (18) durch Durchbohren der Deckfolie (7) mittels der harpunenförmigen Spitzen (10) der Klammer (2; 102; 202; 302; 402) ein Teil (14C, 14D) des Verhakungsgreifelements die Kontur der Öffnung (18) übergreift.

## Claims

1. Clip (2; 102; 202; 302; 402) for fastening tubes or cables (16) to a supporting structure (3) comprising a plate (5) covered by a finishing sheet (7), wherein the clip (2; 102; 202; 302; 402) has a U-shaped form in one plane (X-Z) and has two substantially parallel arms (6) connected by a curved median part (4), wherein each arm is delimited by at least one front face (62) and rear face (66) opposite one another and substantially parallel to the plane (X-Z), and each arm is terminated by a forked point (10) comprising at least one wing (12) attached to this arm, at least one arm comprises a claw (14; 114; 214; 314; 414) for gripping into the finishing sheet (7) and located between the curved median part and the forked point, **characterised in that** in a direction (Y) perpendicular to the plane (X-Z), the gripping claw (14; 114; 214; 314; 414) projects beyond a first zone (62,622) of the front face (62) and/or a first zone (66, 662) of the rear face (66) of the arm, which are located in a second zone (Z1) extending along the arm (6), up to 5 mm on either side of the part (S1, S2) of the gripping claw furthest away from the first zone (62, 622) of the front face (62) and/or of the first zone (66, 662) of the rear face (66), and **in that** no part of the clip is located in the extension of the gripping claw in a direction (Z) perpendicular to the two arms (6) in a first direction extending from the free space located between the arms (6) to the space located outside the arms (6) and/or in a second direction opposed to the first direction.

2. Clip (2; 102; 202; 302; 402) according to claim 1, **characterised in that** the minimum projection (D) of the gripping claw (14; 114; 214; 314; 414) in relation to the first zone (62, 662) of the front face (62) and/or the first zone (66, 662) of the rear face (66) of the arm (6) measured in the direction (Y) perpendicular to the plane (X-Z) and in the second zone (Z1) ranges between 0.5 mm and 3 mm.

3. Clip (2; 102; 202; 302; 402) according to one of claims 1 or 2, **characterised in that** the maximum width (L14; L114; L214; L314; L414) of the claw (14; 114; 214; 314; 414) measured in the direction (Y) perpendicular to the plane (X-Z) is strictly greater than the minimum opening width (L'6) of the arm (6) measured in the second zone (Z1).

4. Clip (102; 202) according to one of claims 1 or 2, **characterised in that** the claw (114; 214) extends at least partially over at least the front face (62) and/or the rear face (66) of the arm (6) and/or at least an outer lateral face (64) of the arm (6) facing away from the other arm and/or an inner lateral face (68) of the arm facing the other arm.

5. Clip (302) according to one of the preceding claims, **characterised in that** the claw (314) is stepped and comprises:
• a first part (314₁) delimited on the side of the curved median part (4) and opposite the forked points (10) by an upper face (314A1),
• a second part (314₂) that is connected to the upper face (314A1) of the first part (314₁).

6. Clip (102; 302) according to one of the preceding claims, **characterised in that** the claw (114; 314) extends at least partially between the two arms (6) of the clip.

7. Clip (2; 102; 202; 302; 402) according to one of the preceding claims, **characterised in that** the claw (14; 114; 214; 314; 414) comprises at least one face (14A; 114A; 214A; 314A; 414A) for support against the finishing sheet (7).

8. Clip (2; 102; 202; 302; 402) according to one of the preceding claims, **characterised in that** the maximum width (L14; L114; L214; L314; L414) of the gripping claw (14; 114; 214; 314; 414) is strictly greater than the maximum width (L12) of a wing (12) extending in line with the gripping claw.

9. Clip (2 ;102; 202; 302; 402) according to one of the preceding claims, **characterised in that** the claw (14; 114; 214; 314; 414) comprises at least one part (14C, 14D), which projects beyond the contour (C) formed by the projection of the corresponding arm (6) and each corresponding wing (12) in a plane (Y-Z) perpendicular to the direction of the arm (6).

10. Use of a clip (2; 102; 202; 302; 402) according to one of claims 1 to 9 for fastening tubes or cables (16) to a supporting structure (3) comprising a plate (5) covered by a finishing sheet (7), **characterised in that** after formation of an orifice (18) by perforation of the finishing sheet (7) by the forked points (10) of the clip (2; 102; 202; 302; 402), a part (14C, 14D) of the gripping claw projects beyond the contour of the orifice (18).
